# EUROPEAN PATENT APPLICATION

(11) **EP 4 675 459 A1**
(43) Date of publication of application: **07.01.2026**
(21) Application number: 23930615.2
(22) Date of filing: 31.03.2023
(51) Int. Cl.: G06F 16/532

(54) **SEARCH SYSTEM, SEARCH METHOD, AND INFORMATION PROCESSING DEVICE**

(71) Applicant: Rakuten Group, Inc., Tokyo 158-0094 (JP)
(72) Inventor: TAY Noel Nuo Wi, Tokyo 158-0094 (JP); DAIF Mahmoud, Tokyo 158-0094 (JP); BHATT Prakruti, Tokyo 158-0094 (JP)
(74) Representative: Hoffmann Eitle
(86) International application number: PCT/JP2023/013487
(87) International publication number: WO 2024/201980

(57) **Abstract**

A search system: acquires a query for searching for a desired item; generates an image using the query and a trained machine learning model; and searches for the item based on the image.

## Description

### TECHNICAL FIELD

The present invention relates to a search system, a search method, and an information processing apparatus, and particularly relates to a technique for searching for an item corresponding to a query that has been input.

### BACKGROUND ART

Electronic commerce (e-commerce) has become widespread in recent years, and this has resulted in many e-commerce websites being built on the web. On an e-commerce website, a search based on a search query (hereinafter also referred to simply as a "query") input by a user is performed in order to present an item desired by the user to the user. For example, Patent Literature Document 1 discloses a search system in which a product search is performed by searching for product data that includes a character string matching text (an example of a query) that has been input by a user.

### LISTING OF REFERENCES

### PATENT LITERATURE DOCUMENTS

Patent Literature Document 1: JP 2001-265781A

### SUMMARY OF THE INVENTION

### PROBLEMS TO BE SOLVED BY THE INVENTION

In conventional search systems, there were cases in which an appropriate search result could not be obtained depending on the query input by the user. For example, in a system such as that disclosed in Patent Literature Document 1 in which a search is performed for product data that includes a character string matching text that has been input as a query, the possibility of a match between a query and a character string in product data would decrease should lengthy text be input as the query. Thus, there was a possibility that an appropriate search result may not be obtained in such a case.

In view of the above-described problem, the present disclosure provides a technique for flexibly receiving input of a query from a user and obtaining an appropriate search result corresponding to the query.

### SOLUTION TO THE PROBLEMS

A search system according to one aspect of the present disclosure includes: a query acquisition unit that acquires a query for searching for a desired item; an image generation unit that generates an image using the query and a trained machine learning model; and a search unit that searches for the item based on the image.

A search method according to one aspect of the present disclosure includes: a query acquisition step for acquiring a query for searching for a desired item; an image generation step for generating an image using the query and a trained machine learning model; and a search step for searching for the item based on the image.

An information processing apparatus according to one aspect of the present disclosure includes: a query acquisition unit that acquires a query for searching for a desired item; an image generation unit that generates a plurality of images using the query and a trained diffusion model; and a feature vector acquisition unit that, based on the plurality of images, acquires a feature vector for searching for the item.

### ADVANTAGEOUS EFFECTS OF THE INVENTION

According to the present invention, it becomes possible to flexibly receive input of a query from a user and obtain an appropriate search result corresponding to the query.

### BRIEF DESCRIPTION OF THE DRAWINGS

FIG. 1 illustrates an example of a configuration of an information processing system.
FIG. 2 illustrates an example of a functional configuration of an information processing apparatus.
FIG. 3 illustrates an example of a functional configuration of a search apparatus.
FIG. 4 is a diagram for describing an image generation model during a training phase.
FIG. 5 illustrates an example of a hardware configuration of the information processing apparatus and the search apparatus according to an embodiment.
FIG. 6A is a diagram for describing a procedure of a first type of image generation.
FIG. 6B is a diagram for describing a procedure of a third type of image generation.
FIG. 7 is a sequence diagram illustrating a flow of processing executed in the information processing system.
FIG. 8A illustrates an example of images generated by the information processing apparatus.
FIG. 8B illustrates an example of a search result page generated by the search apparatus.

### DESCRIPTION OF EMBODIMENTS

Embodiments of the present invention will now be described in detail with reference to the accompanying drawings. Out of the component elements described below, elements with the same functions have been assigned the same reference numerals, and description thereof is omitted. Note that the embodiments disclosed below are mere example implementations of the present invention, and it is possible to make changes and modifications as appropriate according to the configuration and/or various conditions of the apparatus to which the present invention is to be applied. Accordingly, the present invention is not limited to the embodiments described below. The combination of features described in these embodiments may include features that are not essential when implementing the present invention.

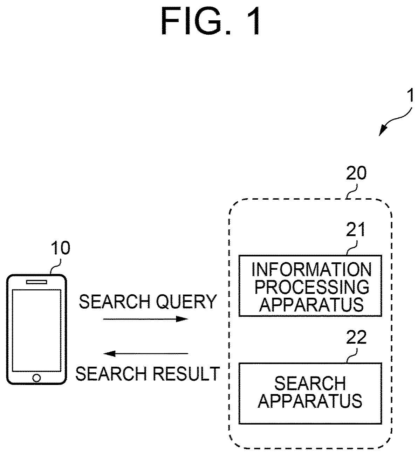

FIG. 1 illustrates an example of an information processing system 1 according to the present embodiment. As one example, the information processing system 1 is configured to include a user apparatus 10 and a search system 20. The search system 20 is configured to include an information processing apparatus 21 and a search apparatus 22. In the information processing system 1, the user apparatus 10, by being operated by a user, transmits a search query (hereinafter also simply referred to as a "query") for a desired item to the search system 20, and the search system 20, upon receiving the query, operates so as to transmit a search result matching the query to the user apparatus 10.

For example, the user apparatus 10 is a device such as a smartphone or a tablet, and is configured to be capable of communicating with the search system 20 (i.e., the information processing apparatus 21 and the search apparatus 22) via a public network based on Long-Term Evolution (LTE), etc., and/or a wireless communication network such as a wireless local area network (LAN). The user apparatus 10 includes a display unit (display surface) such as a liquid-crystal display, and the user of the user apparatus 10 can perform various operations via a graphic user interface (GUI) that the liquid-crystal display is equipped with. The operations include various operations performed on content (image, etc.) displayed on a screen, such as tapping, swiping, and scrolling performed using one or more fingers, a stylus, etc.

Note that the user apparatus 10 is not limited to being a device in a form as illustrated in FIG. 1, and may be a device such as a desktop personal computer (PC) or a laptop PC. In such a case, operations by the user may be performed using one or more input devices such as a mouse and a keyboard. Furthermore, the user apparatus 10 may be provided with a separate display unit.

In the search system 20, the search apparatus 22 is a server apparatus that provides an electronic commerce website (e-commerce website). The user of the user apparatus 10 can access the e-commerce website provided by the search apparatus 22, input a query for searching for a desired item into a search window (input field) on the website, and submit the query. Accordingly, the user apparatus 10 transmits the query input by the user to the search system 20. The information processing apparatus 21 receives the query transmitted from the user apparatus 10, and generates one or more images based on the query. Alternatively, the information processing apparatus 21 may generate one or more images from information other than the query. Furthermore, the information processing apparatus 21 acquires feature vectors (hereinafter also referred to as image features) representing features of the one or more images, and outputs the image features to the search apparatus 22. The search apparatus 22 acquires the image features acquired by the information processing apparatus 21, and, based on the image features, generates a webpage (search result page) displaying a search result. The search apparatus 22 transmits (provides) the generated search result page to the user apparatus 10. Note that, while the information processing apparatus 21 and the search apparatus 22 are configured as separate apparatuses in FIG. 1, the information processing apparatus 21 and the search apparatus 22 may be configured as a single information processing apparatus.

In the present embodiment, a query input by the user of the user apparatus 10 may be text (e.g., text information describing an item), a tag (hereinafter also referred to as an "attribute tag") indicating an attribute (the color, brand, category, genre, size, and/or target gender (male, female, unisex, etc.) of an item), or an image (e.g., an image representing an item). Alternatively, the query may be a combination of two or more among text, an attribute tag, and an image. Note that an image used as a query may be an incomplete image, such as an image having a missing portion, an unclear image, or a partial image.

Furthermore, information identifying the user apparatus 10 and information about the date and time when the query was input are associated with a query input by the user of the user apparatus 10. Furthermore, features (hereinafter also referred to as "user features") of the user and the user apparatus 10 may be associated with the query. The user features may include demographic information. The demographic information is constituted from demographic user features (attributes), such as gender, age, region of residence, occupation, and family composition.

Furthermore, in the present embodiment, search-target items may be services and products, tangible or intangible, that can be provided in relation to various services. For example, in the case of digital content services, items include moving-image content such as movies and anime, still-image content such as photographs and illustrations, etc. Also, in the case of e-commerce services, items include products, intangible or tangible, that are offered via online shopping, etc. Furthermore, in the case of travel services, items include reservations and information relating to hotels, package tours, and transportation, etc. Also, in the case of mobile services, items include mobile devices, connection to public networks and/or the Internet, communication usage fees, etc. Furthermore, in the case of sports and cultural services, items include events, such as sport events and concerts, products sold at events, etc.

### [Functional Configuration of Information Processing Apparatus 21]

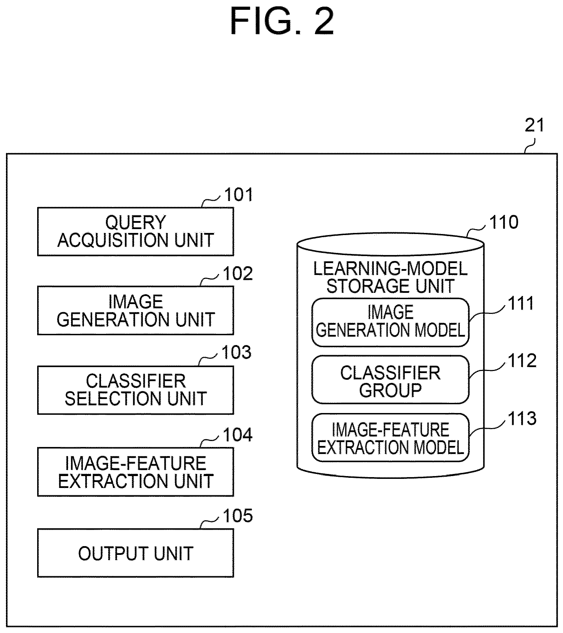

FIG. 2 illustrates an example of a functional configuration of the information processing apparatus 21 according to the present embodiment. As an example of the functional configuration thereof, the information processing apparatus 21 is formed by a query acquisition unit 101, an image generation unit 102, a classifier selection unit 103, an image-feature extraction unit 104, an output unit 105, and a learning-model storage unit 110. Stored in the learning-model storage unit 110 are an image generation model 111, a classifier group 112 including a plurality of classifiers (image recognition models), and an image-feature extraction model 113, which are trained machine learning models.

The query acquisition unit 101 acquires a query transmitted from the user apparatus 10 by the user apparatus 10 being operated by the user. As mentioned above, the query may be text, an attribute tag, or an image (e.g., an image representing an item). Alternatively, the query may be a combination of two or more among text, an attribute tag, and an image. Note that the query is not limited to these, and may be any kind of information that can be transmitted by the user apparatus 10 to search for a desired item.

The image generation unit 102 generates one or more images based on the query acquired by the query acquisition unit 101. Alternatively, without the query, the image generation unit 102 may generate one or more images based on a later-described classifier. In the present embodiment, the image generation unit 102 generates the images using the trained image generation model 111 stored in the learning-model storage unit 110.

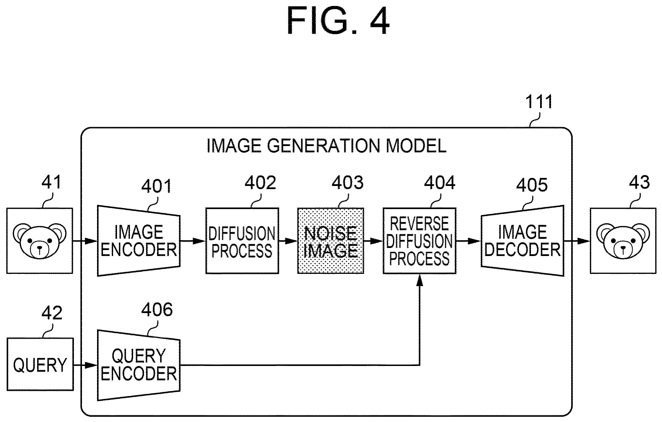

Here, the image generation model 111 during the training phase will be described with reference to FIG. 4. FIG. 4 is a diagram for describing the image generation model 111 during the training phase. The image generation model 111 is a diffusion model in the field of machine learning. When applied to images, a diffusion model generates an image by gradually reducing noise from a noise image, and Stable Diffusion is an example of a known model. Because the image generation model 111 is configured to also reflect query information, the image generation model 111 can be referred to as a query-conditioned diffusion model. Note that, while Generative Adversarial Networks (GANs) are also known as machine learning models for image generation, a diffusion model can generate a plurality of images having higher accuracy and diversity than GANs.

In FIG. 4, an image 41 (reference image for training) and a query 42 are used as input data during the training phase. The image 41 is input to an image encoder 401 in the image generation model 111. A Variational Autoencoder (VAE) may be used as the image encoder 401. The image encoder 401 converts the image 41 (pixel image) into a latent representation (latent image embedding representation) in a latent space. Thus, a high-dimensional image is embedded into a low-dimensional latent space, and the load for calculation processing is reduced. Then, a noise image 403 is generated by noise (e.g., Gaussian noise) being repeatedly added in a plurality of time steps in the subsequent diffusion process 402 to the latent representation obtained by the conversion by the image encoder 401.

The noise added in the diffusion process 402 is gradually removed from the noise image 403 in a reverse diffusion process 404. U-Net may be used for noise removal in the reverse diffusion process 404. U-Net is one type of a fully convolutional network (FCN), and is configured to include a plurality of blocks including a convolutional layer and a plurality of blocks including an attention layer.

Information about the query 42 input to the image generation model 111 is also used in the reverse diffusion process 404. Specifically, a feature vector (embedding vector) embedded in a feature space is extracted from the query 42 by a query encoder 406. The feature vector extracted by the query encoder 406 represents features of the query 42, and is hereinafter also referred to as a "query feature". The query encoder 406 is a trained model (transformer) that is configured to extract the query feature from the query 42. If the query 42 is text, Contrastive Language-Image Pre-training (CLIP) can be used as the query encoder 406, for example.

Based on the query feature obtained by the query encoder 406, the reverse diffusion process 404 derives noise to be removed from the input noise image 403, and subtracts the derived noise from the noise image 403. If U-Net is used for the reverse diffusion process 404, noise is derived by the query feature obtained by the query encoder 406 being input to each of the plurality of blocks including an attention layer. The output obtained by the derived noise being subtracted from the noise image 403 in the reverse diffusion process 404 is ultimately converted into an image by an image decoder 405, whereby an image 43 is generated. Subsequently, the error (difference) between the image 43 (generated image) and the image 41 (training image) is calculated, and the image generation model 111 is trained so that the error decreases. For example, a mean absolute error (MAE) or a mean squared error (MSE) is calculated from the pixel values of the image 43 and the image 41, and the image generation model 111 is trained so that the error decreases.

As the image 41, at least some of all images representing the items that can be offered on the e-commerce website provided by the search apparatus 22 may be used. Note that the image 41 is not limited to an image representing an item, and may be or may include an image that is not directly related to an item that can be offered on the e-commerce website. The above-described training processing (noise image generation and image generation processing) is performed for the at least some images. The trained image generation model 111 is stored in the learning-model storage unit 110. If an item offered on the e-commerce website is updated and the image representing the item is changed (i.e., if there is a change in input data), the image generation model 111 is further trained accordingly and stored in the learning-model storage unit 110. Note that the image generation model 111 may be trained by a predetermined functional block of the information processing apparatus 21 and stored in the learning-model storage unit 110, or may be trained by an external apparatus and stored in the learning-model storage unit 110.

Returning to the explanation regarding FIG. 2, the image generation unit 102 generates one or more images using the image generation model 111 trained through the above-described flow. The procedure of the image generation by the image generation unit 102 will be described later.

If a classifier is to be used in the image generation by the image generation unit 102, the classifier selection unit 103 selects the classifier to be used from the classifier group 112, which is stored in the learning-model storage unit 110 and includes a plurality of classifiers. The plurality of classifiers included in the classifier group 112 are prepared in advance, and each classifier is a trained classifier (image recognition model) that is configured to classify images. The classifier group 112 and the selection of a classifier will be described later.

Using the trained image-feature extraction model 113 stored in the learning-model storage unit 110, the image-feature extraction unit 104 extracts feature vectors (embedding vectors) embedded in a feature space from individual ones of the one or more images generated by the image generation unit 102. The feature vectors extracted by the image-feature extraction unit 104 correspond to image features representing features of the individual images. The image-feature extraction model 113 is a learning model that has been trained so that, for an image that is input thereto, the image-feature extraction model 113 extracts and outputs an image feature of the image. The image-feature extraction unit 104 inputs each image generated by the image generation unit 102 to a feature extraction model 221 to extract and acquire an image feature of the image.

The output unit 105 outputs the image features acquired by the image-feature extraction unit 104 to the search apparatus 22; i.e., the output unit 105 outputs, to the search apparatus 22, the image features of individual ones of the one or more images generated by the image generation unit 102. Furthermore, the output unit 105 may output, to the search apparatus 22, image data including the one or more images generated by the image generation unit 102. Furthermore, the output unit 105 may be configured to output to (present on) the user apparatus 10 image data including the one or more images generated by the image generation unit 102.

### [Functional Configuration of Search Apparatus 22]

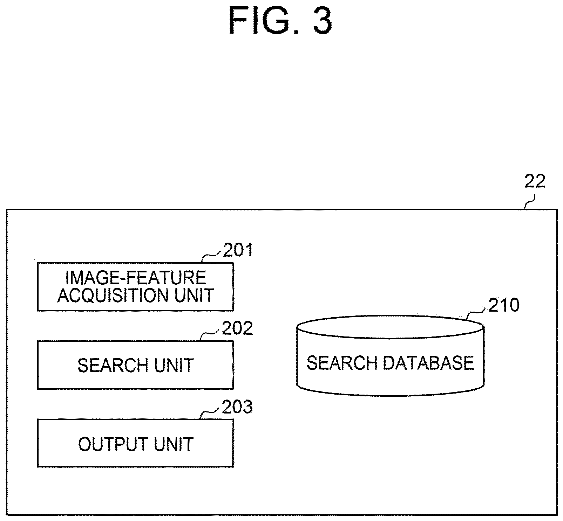

FIG. 3 illustrates an example of a functional configuration of the search apparatus 22 according to the present embodiment. As an example of the functional configuration thereof, the search apparatus 22 is formed by an image-feature acquisition unit 201, a search unit 202, an output unit 203, and a search database 210. Data relating to each item (hereinafter also referred to as "item data"), including an image representing the item, is stored in the search database 210. Each piece of item data is provided with identification information identifying the corresponding item, and has associated therewith an image feature of the corresponding image. Each piece of item data may include attribute information (related information) such as the price and description of the corresponding item. The item data stored in the search database 210 may be updated in accordance with the addition and/or deletion of items to and from the e-commerce website provided by the search apparatus 22, and/or may be updated in accordance with the addition and/or deletion of search conditions to and from the e-commerce website.

The image-feature acquisition unit 201 acquires image features (feature vectors) generated by the information processing apparatus 21. That is, the image-feature acquisition unit 201 acquires image features representing the features of one or more images generated in the information processing apparatus 21 based on a query transmitted from the user apparatus 10. Alternatively, the image-feature acquisition unit 201 may acquire image features representing the features of one or more images generated in the information processing apparatus 21 based on a selected classifier. In addition to or in place of this, the image-feature acquisition unit 201 may acquire image data including one or more images generated by the information processing apparatus 21.

The search unit 202 performs an item search based on the image features acquired by the image-feature acquisition unit 201. For example, the search unit 202 performs a search in the search database 210 using the image features as a search condition, and acquires item data that have features that are the same as or similar to the image features as a search result. Furthermore, the search unit 202 creates (composes) a webpage (search result page) including the acquired item data.

In addition to or in place of this, the search unit 202 may extract image features from images acquired by the image-feature acquisition unit 201, and acquire item data by performing a search in the search database 210 using the image features as a search condition. In this case, the search apparatus 22 includes the trained image-feature extraction model 113. The search unit 202 may use the image-feature extraction model 113 to extract image features from images acquired by the image-feature acquisition unit 201, and acquire item data by performing a search in the search database 210 using the image features as a search condition. Furthermore, the search unit 202 may create (compose) a search result page including the acquired item data.

The output unit 203 transmits (provides) the search result page created by the search unit 202 to the user apparatus 10. The search result page is data that is a response to a query transmitted from the user apparatus 10, and may be displayed on the display unit of the user apparatus 10.

### [Hardware Configurations of Information Processing Apparatus 21 and Search Apparatus 22]

Next, an example of hardware configurations of the information processing apparatus 21 and the search apparatus 22 will be described. Both apparatuses may have the same hardware configuration, and thus the information processing apparatus 21 will be described here. Furthermore, the user apparatus 10 may also have a similar hardware configuration.

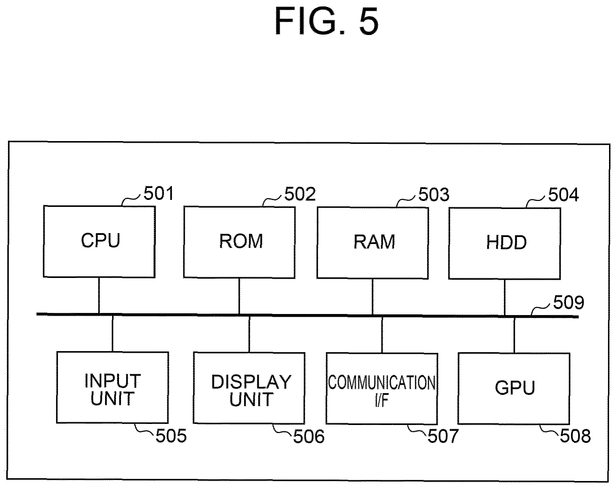

FIG. 5 is a block diagram illustrating an example of the hardware configuration of the information processing apparatus 21 according to the present embodiment.

The information processing apparatus 21 according to the present embodiment can be implemented on any computer, any mobile device, or any other processing platform, whether single or multiple.

With reference to FIG. 5, an example in which the information processing apparatus 21 is implemented on a single computer is illustrated; however, the information processing apparatus 21 according to the present embodiment may be implemented on a computer system including multiple computers. The multiple computers may be connected via a wired or wireless network so as to be capable of communicating with one another.

As illustrated in FIG. 5, the information processing apparatus 21 may include a central processing unit (CPU) 501, a read-only memory (ROM) 502, a RAM 503, a hard disk drive (HDD) 504, an input unit 505, a display unit 506, a communication I/F 507, a graphic processing unit (GPU) 508, and a system bus 509. The information processing apparatus 21 may also be provided with an external memory.

The CPU 501 has overall control over the operations in the information processing apparatus 21, and controls the components (502 to 508) via the system bus 509, which is a data transfer path.

The ROM 502 is a non-volatile memory that stores therein a control program, etc., that are necessary for the CPU 501 to execute processing. Note that the program may be stored in a non-volatile memory such as the HDD 504 or a solid-state drive (SSD), or in an external memory such as a detachable storage medium (unillustrated).

The random-access memory (RAM) 503 is a volatile memory, and functions as the working area, main memory, etc., of the CPU 501. That is, in order to execute processing, the CPU 501 loads one or more necessary programs, etc., from the ROM 502 into the RAM 503, and realizes various functions and operations by executing the programs, etc. In the case of the information processing apparatus 21, the RAM 503 may include the learning-model storage unit 110 illustrated in FIG. 1.

For example, the HDD 504 stores therein various types of data, information, etc., that are necessary for the CPU 501 to perform processing using a program. Furthermore, for example, the HDD 504 stores therein various types of data, information, etc., that are obtained by the CPU 501 performing processing using a program, etc.

The input unit 505 is formed by a keyboard and/or a pointing device such as a mouse.

The display unit 506 is formed by a monitor such as a liquid-crystal display (LCD). The display unit 506 may function as a graphical user interface (GUI) by being formed so as to be combined with the input unit 505.

The communication I/F 507 is an interface that controls communication between the information processing apparatus 21 and external apparatuses.

The communication I/F 507 provides an interface with a network, and executes communication with external apparatuses via the network. Various types of data, parameters, etc., are transmitted and received between the information processing apparatus 21 and external apparatuses via the communication I/F 507. In the present embodiment, the communication I/F 507 may execute communication via a dedicated line or a wired local area network (LAN) conforming to a communication standard such as Ethernet (registered trademark). However, the network that can be used in the present embodiment is not limited to this, and the network may be formed by a wireless network. This wireless network includes a wireless personal area network (PAN) such as Bluetooth (registered trademark), ZigBee (registered trademark), or Ultra-Wideband (UWB). Furthermore, the wireless network includes a wireless local area network (LAN) such as Wireless Fidelity (Wi-Fi; registered trademark), or a wireless metropolitan area network (MAN) such as WiMAX (registered trademark). Furthermore, the network includes a wireless wide area network (WAN) such as 4G or 5G. Note that the communication standard, scale, and topology of the network are not limited to the above, as long as the network can connect apparatuses so as to be capable of communicating with one another and communication can be performed thereon.

The GPU 508 is a processor specializing in image processing. In cooperation with the CPU 501, the GPU 508 performs the image generation processing according to the present embodiment, for example. Note that the GPU 508 may also perform processing other than image processing.

The functions of at least some of the elements of the information processing apparatus 21 illustrated in FIG. 2 can be realized by the CPU 501 executing a program. Nevertheless, a configuration may be adopted such that the functions of at least some of the elements of the information processing apparatus 21 illustrated in FIG. 2 operate as dedicated hardware. In this case, the dedicated hardware operates based on control by the CPU 501.

### [Procedures of Image Generation]

Next, procedures of the image generation executed by the image generation unit 102 in the information processing apparatus 21 will be described. Procedures of three types of image generation (first, second, and third types) will be described in the present embodiment. Reference will be made to FIG. 4 in regard to the configuration of the image generation model 111.

### (1) Query-based Image Generation

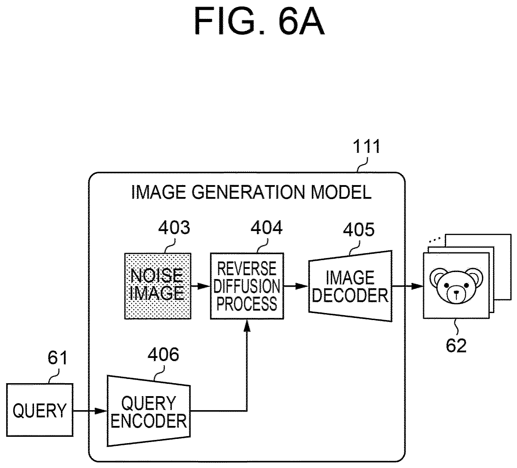

FIG. 6A is a diagram for describing the procedure of the first type of image generation. As the first type of image generation, the image generation unit 102 uses the trained image generation model 111 and generates one or more images based on a query that has been transmitted from the user apparatus 10 and acquired by the query acquisition unit 101.

In FIG. 6A, the image generation unit 102 inputs a query 61 acquired by the query acquisition unit 101 to the trained image generation model 111. The query 61 is converted into a query feature by the query encoder 406, and is input to the reverse diffusion process 404. Based on the query feature obtained by the query encoder 406, the reverse diffusion process 404 derives noise to be removed from a noise image 403, and subtracts the derived noise from the noise image 403. The output obtained by the derived noise being subtracted from the noise image 403 in the reverse diffusion process 404 is ultimately converted into an image 62 by the image decoder 405, and the image 62 is output. By such processing being performed on different noise images 403, a plurality of images including the image 62 are generated. Alternatively, if the query 61 is constituted from a plurality of queries (e.g., multiple pieces of text or images), a plurality of images may be generated by such processing being performed on each query feature. Alternatively, a plurality of images may be generated by changing the configuration and/or parameters of the image decoder 405. Alternatively, a plurality of images may be generated by changing the configuration and/or parameters of the query encoder 406. Note that, in the present disclosure, the generation of the image 62 may refer to the generation of a plurality of images including the image 62 based on the above-described procedure.

In such a manner, in the first type of image generation, the image generation unit 102 acquires a query 61 that has been input by the user of the user apparatus 10 to search for a desired item, and generates one or more images based on the query 61 and the trained image generation model 111. One or more images based on the query 61 can be generated by using, for image generation, a query feature (feature vector) that is generated by the query encoder 406 and that indicates features of the query 61.

Note that, as mentioned above, an image used as the query 61 may be an incomplete image, such as an image having a missing portion, an unclear image, or a partial image. Taking an image having a missing portion as an example, the missing portion is masked in the image, and noise is added to areas other than the masked portion. Then, by removing noise via the reverse diffusion process from an image obtained by combining the generated noise image and the masked portion (i.e., the missing portion), a more complete image in which the missing portion is predicted (impainted) can be generated.

### (2) Sampling-based Image Generation

The second type of image generation is sampling-based image generation. With reference to FIG. 6A, by performing sampling, the reverse diffusion process 404 generates a large amount of output from a single query feature obtained by the query encoder 406. The output is converted into a plurality of images including the image 62 by the image decoder 405, and the plurality of images are output. Thus, a large number of images can be generated. The large number of images are images forming a distribution based on the single query 61.

### (3) Classifier-based Image Generation

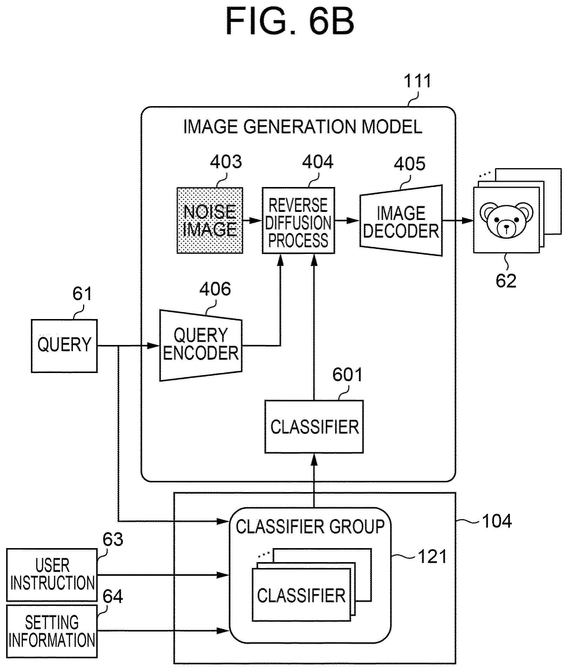

FIG. 6B is a diagram for describing the procedure of the third type of image generation. As the third type of image generation, the image generation unit 102 generates one or more images using the trained image generation model 111, in which a classifier is included. Specifically, the image generation unit 102 generates one or more images using the trained image generation model 111 and gradients from a classifier. The present type of image generation is classifier-guided image generation. In the present embodiment, a classifier selected by the classifier selection unit 103 from the classifier group 112 stored in the learning-model storage unit 110 is used. Each of the classifiers included in the classifier group 112 is a trained classifier (image recognition model) that is configured to classify images having a predetermined feature. Each classifier is provided with identification information for identifying the classifier. Furthermore, each classifier has associated therewith one or more features (keywords) relating to images that the classifier is capable of classifying.

As illustrated in FIG. 6B, the present type of image generation differs from the first type of image generation (see FIG. 6A) described above in that gradients output from a classifier 601 are input to the reverse diffusion process 404. The classifier 601 is selected from the classifier group 112 by the classifier selection unit 103.

In the present embodiment, the classifier selection unit 103 can select a classifier according to the following procedure.

For example, the classifier selection unit 103 may analyze a query 61, extract a feature included in the query 61, and select a classifier having the feature. For example, if the query 61 is text, the classifier selection unit 103 may extract (predict) a feature such as an item name or item genre included in the text, and select a classifier associated with the feature. The classifier selection unit 103 can extract the feature using a rule-based approach or machine learning (e.g., the query encoder 406).

Alternatively, the classifier selection unit 103 may select a classifier in accordance with an instruction 63 from a user. The user may be the user of the user apparatus 10. For example, if the classifier selection unit 103 receives identification information of a classifier as the user instruction 63 from the user, the classifier selection unit 103 may select the classifier corresponding to the identification information. Furthermore, if the classifier selection unit 103 acquires, as the user instruction 63 from the user, text including a feature of images to be classified or a feature of images to be excluded, for example, the classifier selection unit 103 may select the classifier associated with the feature indicated by the text. Specifically, if the classifier selection unit 103 acquires text such as "80's style fashion" or "shirt without words" from the user, the classifier selection unit 103 may extract (predict) the feature indicated by the text, and select the classifier associated with the feature. The classifier selection unit 103 can extract the feature using a rule-based approach or machine learning.

The user instruction 63 for selecting a classifier may be included in the query 61, or may be transmitted from the user apparatus 10 separately from the query 61.

Alternatively, the classifier selection unit 103 may select a classifier in accordance with preset setting information 64. The setting information 64 may be set to the classifier selection unit 103 in advance, or may be set from an external apparatus. For example, if a webpage type is included in the setting information 64, the classifier selection unit 103 may select a classifier in accordance with the webpage type. Specifically, if the setting information 64 includes information relating to food-related webpages, the classifier selection unit 103 may select a classifier associated with food-related features.

The selected classifier 601 outputs gradients from the classifier 601 to the reverse diffusion process 404 as weights so that the probability increases of images that the classifier 601 is capable of classifying being generated. The reverse diffusion process 404 generates an image 62 by removing noise from a noise image 403 in accordance with the query feature output from the query encoder 406 and the gradients output from the classifier 601. Thus, the image generation unit 102 can generate images so as to be limited to those that the selected classifier 601 is capable of classifying.

Note that, if a classifier is used, the image generation unit 102 may generate the image 62 without the query 61 by removing noise from the noise image 403 in accordance with the gradients from the classifier 601. For example, the classifier selection unit 103 may select a classifier 601 in accordance with the user instruction 63 transmitted from the user apparatus 10, and the image generation unit 102 may generate the image 62 by removing noise from the noise image 403 in accordance with the gradients from the classifier 601. Alternatively, the classifier selection unit 103 may select a classifier 601 based on the setting information 64 at a predetermined timing, and the image generation unit 102 may generate the image 62 by removing noise from the noise image 403 in accordance with the gradients from the classifier 601.

In such a manner, in the third type of image generation, the image generation unit 102 generates one or more images based on a query 61 input by the user of the user apparatus 10 to search for a desired item, gradients from a classifier 601, and the trained image generation model 111. The classifier 601 may be selected by the classifier selection unit 103 based on the query 61, a user instruction 63, or setting information 64. Thus, the image generation unit 102 can generate images that the selected classifier 601 is capable of classifying, i.e., images targeted by the classifier 601. Furthermore, in the present type of image generation, even if there is no query 61, the image generation unit 102 can generate images in accordance with the classifier selected based on the user instruction 63 or the setting information 64.

### [Flow of Processing]

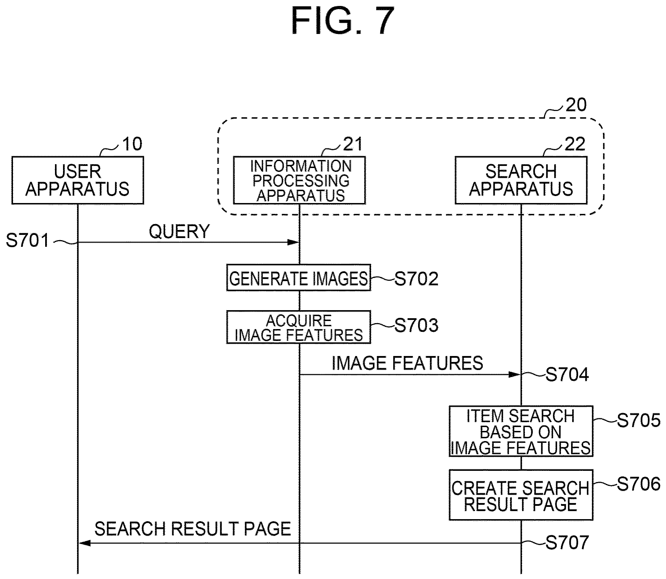

A flow of processing executed in the information processing system 1 according to the present embodiment will be described. FIG. 7 is a sequence diagram illustrating the flow of processing executed in the information processing system 1. As illustrated in FIG. 1, the information processing system 1 is formed by the user apparatus 10, and the search system 20, which includes the information processing apparatus 21 and the search apparatus 22. Here, description will be provided of the flow of processing in a case in which a query for searching for a desired item is transmitted from the user apparatus 10 based on an operation by the user.

Once the user apparatus 10 transmits the query, the query acquisition unit 101 of the information processing apparatus 21 receives and acquires the query (step S701). The query may be text (e.g., text information describing an item) or an attribute tag indicating an attribute (e.g., the color, brand, category, genre, size, and/or target gender (male, female, unisex, etc.) of an item). Alternatively, the query may be a combination of two or more among text, an attribute tag, and an image. The image generation unit 102 of the information processing apparatus 21 generates a plurality of images based on the query and the trained image generation model 111 (step S702). The image generation processing is as described above. Once the plurality of images are generated, the image-feature extraction unit 104 of the information processing apparatus 21 extracts and acquires an image feature (feature vector) of each of the plurality of generated images using the trained image-feature extraction model 113 (step S703). Once the image features are acquired, the output unit 105 of the information processing apparatus 21 outputs the image features to the search apparatus 22 (step S704).

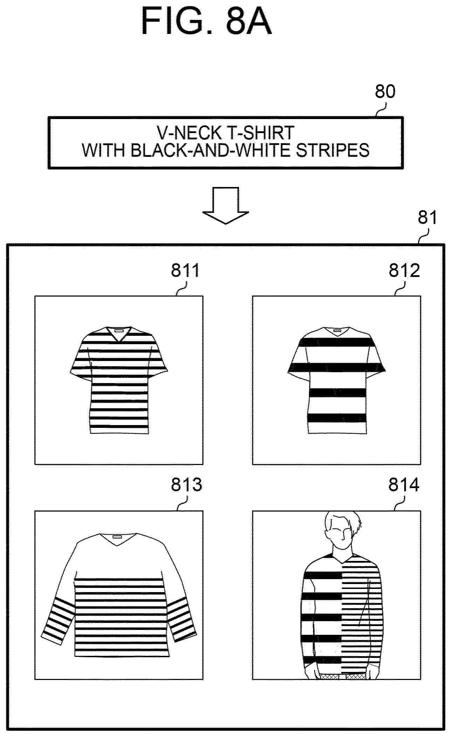

FIG. 8A illustrates an example of the images generated in step S702 in response to the query transmitted from the user apparatus 10 in step S701. FIG. 8A illustrates an image group 81 generated by the image generation unit 102 of the information processing apparatus 21 in a case in which a query 80 transmitted from the user apparatus 10 in step S701 is text reading "V-neck T-shirt with black-and-white stripes". The image group 81 includes four images (images 811, 812, 813, and 814). The query 80 is constituted from a relatively long sentence (a long query without any breaks); nevertheless, an image group 81 in which the features of the query 80 are taken into consideration can be generated because a query feature of the query 80 is extracted by the query encoder 406 and images reflecting the query feature are then generated in the image generation model 111.

Returning to FIG. 7, once the image features are output from the output unit 105 of the information processing apparatus 21, the image-feature acquisition unit 201 of the search apparatus 22 acquires the image features (step S704). Subsequently, based on the image features, the search unit 202 of the search apparatus 22 performs an item search using the search database 210 (step S705). For example, the search unit 202 performs a search in the search database 210 using the image features as a search condition, and acquires item data that have features that are the same as or similar to the image features as a search result. Furthermore, the search unit 202 creates (composes) a search result page including the acquired item data (step S706). The output unit transmits (provides) the created search result page to the user apparatus 10 (step S707).

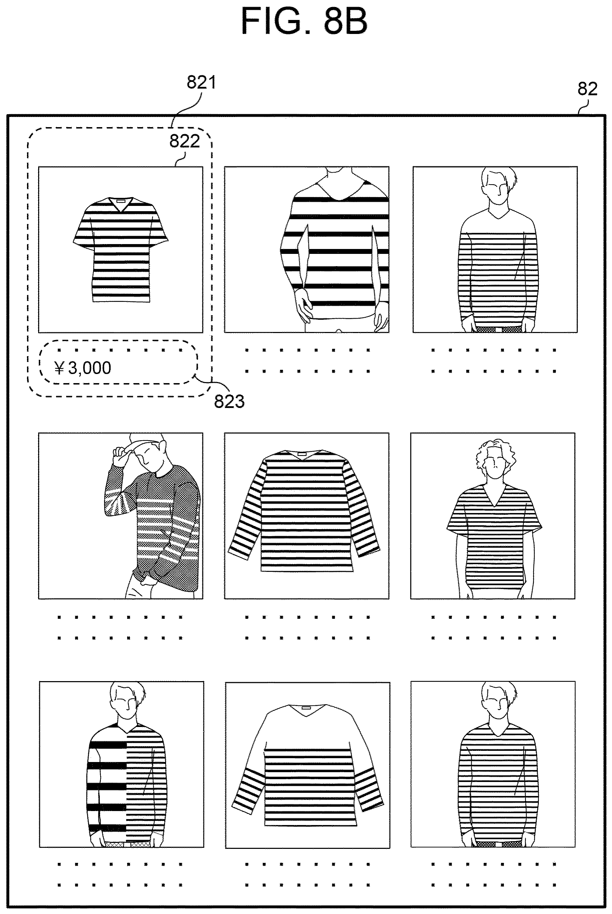

FIG. 8B illustrates an example of the search result page created in step S706 in response to the query transmitted in step S701. FIG. 8B shows a search result page 82 including item data found based on image features extracted from the images 811 to 814 included in the image group 81 illustrated in FIG. 8A, which has been generated in response to the query 80. Taking item data 821 in the search result page 82 as an example, the item data 821 may include an image 822 showing an item, and attribute information 823 such as the price and description of the item. The search result page 82 includes item data found based on the image features extracted from the images 811 to 814 included in the image group 81; thus, the search result page 82 is constituted from pieces of item data reflecting features explicitly and/or implicitly included in the images 811 to 814. The search result page 82 is transmitted to the user apparatus 10 to be displayed on the display unit of the user apparatus 10. The user of the user apparatus 10 can receive the search result page 82 as a search result in response to the query 80.

In such a manner, the search system 20 according to the present embodiment receives a query for a desired item from a user, generates one or more images reflecting a feature of the query, generates a search result based on features of the images, and provides the search result to the user. Here, the query is not limited to text, and may be of any form, such as an attribute tag or an image (including an incomplete image). Thus, the search system 20 can flexibly receive input of a query from a user and provide the user with an appropriate search result corresponding to the query, and this may improve customer satisfaction with an e-commerce website and boost buying motivation.

Note that, while the flow of processing in a case in which a query is transmitted from the user apparatus 10 has been described with reference to FIG. 7, the information processing apparatus 21 may generate images based on the query from the user apparatus 10 and gradients from a selected classifier (step S702), as described earlier with reference in FIG. 6B. In this case, the classifier selection unit 103 of the information processing apparatus 21 may select a classifier based on the query received in step S701. Alternatively, the classifier selection unit 103 may select a classifier based on a user instruction (user instruction 63 in FIG. 6B) or setting information (setting information 64).

Alternatively, without a query from the user apparatus 10, the information processing apparatus 21 may generate images based on gradients from a selected classifier (step S702), as described earlier with reference to FIG. 6B. In this case, the classifier selection unit 103 may select a classifier based on a user instruction (user instruction 63 in FIG. 6B) or setting information (setting information 64). In a case in which gradients from a selected classifier are used without a query, the information processing apparatus 21 can generate images regardless of the timing when a query is received, and, in response to this, the search apparatus 22 can create a search result page based on the generated images (steps S705 and S706) and transmit the created search result page to the user apparatus 10 (step S707). If the user instruction or setting information is based on the past web-service usage conditions of the user of the user apparatus 10, the search result page transmitted to the user may include items matching the potential needs of the user, and thus may serve as an effective push-based advertisement.

The image group 81 illustrated in FIG. 8A, which is generated based on the text 80, is not presented to the user; however, in a different embodiment, the information processing apparatus 21 may be configured to transmit the generated image group 81 to the user apparatus 10 in order to present the image group 81 to the user. Having seen the image group 81, the user may operate the user apparatus 10 to delete unintended images from the image group 81 and transmit the one or more remaining images to the information processing apparatus 21, and the information processing apparatus 21 may acquire image features of the remaining images and transmit the image features to the search apparatus 22. Alternatively, having seen the image group 81, the user may operate the user apparatus 10 to specify one image matching the user's intention from the image group 81 and transmit the image to the information processing apparatus 21, and the information processing apparatus 21 may acquire the image feature of the specified image and transmit the image feature to the search apparatus 22. Thus, the search result created by the search apparatus 22 may become even closer to the result intended by the user.

Note that, while a specific embodiment has been described above, said embodiment is a mere example, and is not intended to limit the scope of the present invention. The apparatus and method disclosed in the present specification may be reduced to practice in embodiments other than that described above. Furthermore, omissions, replacements, and modifications may also be made, as appropriate, to the above-described embodiment without departing from the scope of the present invention. Embodiments obtained by making such omissions, replacements, and modifications are included within the scope of the claims and equivalents thereof, and are included within the technical scope of the present invention.

The disclosure includes the following embodiments.
[1] A search system comprising: a query acquisition unit that acquires a query for searching for a desired item; an image generation unit that generates an image using the query and a trained machine learning model; and a search unit that searches for the item based on the image.
[2] The search system according to [1], wherein the trained machine learning model is a diffusion model subjected to machine learning so that an error between a generated image and a training image decreases, the generated image being generated by removing noise from a noise image obtained by adding noise to the training image.
[3] The search system according to [2], wherein the image generation unit generates a plurality of images using the query and the diffusion model, and the search unit searches for the item based on the plurality of images.
[4] The search system according to [1], wherein the trained machine learning model is a diffusion model subjected to machine learning so as to remove noise from a training image to which noise has been added and thereby generate the training image, the image generation unit generates a plurality of images using the query and the diffusion model, and the search unit searches for the item based on the plurality of images.
[5] The search system according to [3] or [4], wherein the image generation unit generates the plurality of images using the query and the diffusion model, in which a trained classifier that is configured to classify images is included.
[6] The search system according to [5] further comprising a selection unit that selects the classifier from among a plurality of trained classifiers that are configured to classify images.
[7] The search system according to any one of [1] to [6], wherein the query includes one of text, a tag indicating an attribute, and an image, or includes a combination of two or more among text, a tag indicating an attribute, and an image.
[8] A search method comprising: a query acquisition step for acquiring a query for searching for a desired item; an image generation step for generating an image using the query and a trained machine learning model; and a search step for searching for the item based on the image.
[9] An information processing apparatus comprising: a query acquisition unit that acquires a query for searching for a desired item; an image generation unit that generates a plurality of images using the query and a trained diffusion model; and a feature-vector acquisition unit that, based on the plurality of images, acquires a feature vector for searching for the item.
[10] An information processing method comprising: a query acquisition step for acquiring a query for searching for a desired item; an image generation step for generating a plurality of images using the query and a trained diffusion model; and a feature-vector acquisition step for, based on the plurality of images, acquiring a feature vector for searching for the item.
[11] An information processing program for enabling a computer to perform information processing, the program enabling the computer to perform processing comprising: a query acquisition processing to acquire a query for searching for a desired item; an image generation processing to generate an image using the query and a trained machine learning model; and a search processing to search for the item based on the image.
[12] An information processing program for enabling a computer to perform information processing, the program enabling the computer to perform processing comprising: a query acquisition processing to acquire a query for searching for a desired item; an image generation processing to generate a plurality of images using the query and a trained diffusion model; and a feature-vector acquisition processing to, based on the plurality of images, acquire a feature vector for searching for the item.

### REFERENCE NUMERALS AND SYMBOLS

1: Information processing system
10: User apparatus
20: Search system
21: Information processing apparatus
22: Search apparatus
101: Query acquisition unit
102: Image generation unit
103: Classifier selection unit
104: Image-feature extraction unit
105: Output unit
110: Learning-model storage unit
111: Image generation model
112: Classifier group
113: Image-feature extraction model
201: Image-feature acquisition unit
202: Search unit
203: Output unit
210: Search database

## Claims

1. A search system comprising:
a query acquisition unit that acquires a query for searching for a desired item;
an image generation unit that generates an image using the query and a trained machine learning model; and
a search unit that searches for the item based on the image.

2. The search system according to claim 1,
wherein the trained machine learning model is a diffusion model subjected to machine learning so that an error between a generated image and a training image decreases, the generated image being generated by removing noise from a noise image obtained by adding noise to the training image.

3. The search system according to claim 2,
wherein the image generation unit generates a plurality of images using the query and the diffusion model, and
the search unit searches for the item based on the plurality of images.

4. The search system according to claim 1,
wherein the trained machine learning model is a diffusion model subjected to machine learning so as to remove noise from a training image to which noise has been added and thereby generate the training image,
the image generation unit generates a plurality of images using the query and the diffusion model, and
the search unit searches for the item based on the plurality of images.

5. The search system according to claim 3 or 4,
wherein the image generation unit generates the plurality of images using the query and the diffusion model, in which a trained classifier that is configured to classify images is included.

6. The search system according to claim 5 further comprising
a selection unit that selects the classifier from among a plurality of trained classifiers that are configured to classify images.

7. The search system according to any one of claims 1 to 4,
wherein the query includes one of text, a tag indicating an attribute, and an image, or includes a combination of two or more among text, a tag indicating an attribute, and an image.

8. A search method comprising:
a query acquisition step for acquiring a query for searching for a desired item;
an image generation step for generating an image using the query and a trained machine learning model; and
a search step for searching for the item based on the image.

9. An information processing apparatus comprising:
a query acquisition unit that acquires a query for searching for a desired item;
an image generation unit that generates a plurality of images using the query and a trained diffusion model; and
a feature-vector acquisition unit that, based on the plurality of images, acquires a feature vector for searching for the item.
